# EUROPÄISCHE PATENTSCHRIFT

(11) **EP 2 699 743 B1**
(45) Veröffentlichungstag und Bekanntmachung des Hinweises auf die Patenterteilung: **14.09.2016**
(21) Anmeldenummer: 12714967.2
(22) Anmeldetag: 04.04.2012
(51) Int. Cl.: G01B 7/30, B66C 23/86, E02F 9/12, E04G 21/04

(54) **VORRICHTUNG UND VERFAHREN ZUR DICKSTOFF-, INSBESONDERE BETONFÖRDERUNG MIT DREHWINKELMESSUNG**
DEVICE AND METHOD FOR CONVEYING THICK MATTER, IN PARTICULAR CONCRETE, WITH ANGLE OF ROTATION MEASUREMENT
DISPOSITIF ET PROCÉDÉ DE TRANSPORT DE LIQUIDES ÉPAIS, EN PARTICULIER DE BÉTON, MUNI D'UN DISPOSITIF DE MESURE DE L'ANGLE DE PIVOTEMENT

(30) Priorität: 20.04.2011 DE 102011018267
(43) Veröffentlichungstag der Anmeldung: 26.02.2014
(73) Patentinhaber: Schwing GmbH, 44653 Herne (DE)
(72) Erfinder: TRÜMPER, Siegfried, 44287 Dortmund (DE); VIERKOTTEN, Reiner, 46145 Oberhausen (DE)
(74) Vertreter: Isfort, Olaf
(86) Internationale Anmeldenummer: PCT/EP2012/001502
(87) Internationale Veröffentlichungsnummer: WO 2012/143092

(56) Entgegenhaltungen:
- EP-A1- 2 241 529
- FR-A1- 2 538 575
- US-A1- 2006 015 227
- US-B1- 6 202 013

## Beschreibung

Die Erfindung betrifft eine Vorrichtung gemäß dem Oberbegriff des Anspruchs 1 sowie ein Verfah-ren gemäß dem Oberbegriff des Anspruchs 7. Eine solche gattungsgemäße Vorrichtung bzw. ein solches Verfahren ist schon aus US 6 202 013 B bekannt.

Die Erfindung befasst sich mit Betonpumpen, insbesondere Autobetonpumpen, ist jedoch nicht auf die Förderung von Beton beschränkt sondern generell auf die Förderung von Dickstoffen, etwa Schlämmen beliebiger Art und dergleichen anwendbar.

Sowohl im Hochbau wie auch im Tiefbau werden Betonpumpen vielfältiger Art und mit unter-schiedlicher Leistungsauslegung verwendet, um vor Ort zumeist durch Mischerfahrzeuge angelieferten Beton zur Bildung von Wänden, Decken und dergleichen auszubringen. Hierbei werden sowohl stationäre Betonpumpen wie auch verfahrbare Betonpumpen, insbesondere sogenannte Autobetonpumpen verwendet. Im Falle von Autobetonpumpen ist die Pumpe auf dem Rahmen bzw. der Prit-sche eines Lastkraftfahrzeuges angeordnet und saugt aus einem am Fahrzeug angeordneten Einfüll-trichter darin eingegeben Beton an, der dann über eine abgehende Förderleitung gezielt auf der Bau-stelle ausgebracht wird. Derartige Autobetonpumpen weisen üblicherweise einen Mastausleger auf, der aus mehreren gelenkig miteinander verbundenen Mastarmen aufgebaut ist, die für den Fahrbetrieb platzsparend eingeschwenkt werden können, so dass die Mastarme des Mastauslegers mehr oder weniger parallel, jedoch auf engem Raum zusammengeführt auf dem Rahmen bzw. der Pritsche angeordnet sind und damit ein Straßentransport ohne weiteres möglich ist. Diese Mastausleger sind über ein Kippgelenk auf einem Drehschemel gelagert, der seinerseits um eine Vertikalachse drehbar am Fahrzeugrahmen, insbesondere an einem mit dem Fahrzeug festen Mastbock gelagert ist. Durch den Drehschemel mit dem kippbar daran angelenkten und ausschwenkbaren Mastausleger lässt sich der Mastausleger durch Ausklappen der Mastarme ausfahren und räumlich über 360° um die Drehachse des Drehschemels drehen bzw. verschwenken. Dadurch kann vom einmal positionierten Fahrzeug aus ein sehr großer Bereich mit Beton versorgt werden.

Da bei einem mehr oder weniger stark ausgefahrenem Mastausleger, der zudem um die Drehschemelachse beliebig verschwenkbar und damit auch in eine seitlich vom Fahrzeug abkragende Position verstellbar ist, entsprechende Kippmomente auf das Betonfahrzeug einwirken, sind diese Fahrzeuge mit seitlich ausfahrbaren Stützelementen versehen, um eine sichere und damit kippstabile Abstüt-zung der Fahrzeuge zu gewährleisten. Allerdings sind diese Abstützungen durchaus kritisch und je nach Länge des Mastauslegers bedarf es auch einer entsprechenden angepassten Abstützung. Dabei ist in Abhängigkeit der ausgefahrenen Stellung des Mastarmes relativ zum Fahrzeug und dem Schwerpunkt der Autobetonpumpe jeweils eine bestimmte Ausfahrstellung der Abstützelemente erforderlich. Dies ist vor Ort schwierig, zumal häufig an den Baustellen Gegebenheiten vorhanden sind, welche die Lage der Abstützelemente stark einschränken, so dass je nach Baustelle bzw. Standort des Fahrzeugs auf einer Seite die Abstützelemente voll und auf der anderen Seite nicht oder nur teilweise ausgefahren werden können. Für den Fall, dass die über den ausgefahrenen Mastausleger auftretenden Kippmomente nicht durch die Stützfüße aufgefangen werden können, kann es somit zu einem Kippen des Fahrzeugs kommen. Es liegt auf der Hand, dass man vor Ort es nicht dem Fahrer des Betonfahrzeuges überlassen kann, bei welchem Drehwinkel bzw. welcher Ausfahrstellung des Mastauslegers ein Kippen des Fahrzeugs auftreten kann, um entsprechend die Stützfüße auszufahren. Deswegen sind diese Pumpen, insbesondere Autobetonpumpen, mit Systemen ausgerüstet, welche zusätzlich zur Ausfahrung des Mastauslegers auch die genaue Position des Drehkranzes erfassen und auswerten, um entsprechende Sicherheitsvorkehrungen jederzeit treffen zu können.

Bei einer bekannten Ausführungsform wird hierbei zur Drehwinkelbestimmung ein Endlagenschalter verwendet, der am äußeren Umfang des Drehkranzes des Drehschemels montiert ist. Nachteilhaft ist bei dieser Ausgestaltung, dass damit stets nur eine Endstellung des Systems erfasst wird. Ferner bietet dieses System auch keinerlei Redundanz bei einem Versagen des Systems. Vor allem ist aber dieses System nicht für die Messung einer Vielzahl von Zwischenstellungen des Drehkranzes geeignet, weil dafür eine erhebliche Anzahl von Endlagenschaltern erforderlich wäre. Damit ginge aller-dings ein sehr hoher Aufwand für die Verdrahtung der Komponenten und der gesamten Montage einher.

Bei einem weiteren bekannten System wird die Stellung des Drehkranzes mittels zweier am äußeren Umfang angebrachter Drehwinkelmesser erfasst, die jeweils mit einem eigenen Antrieb und zwischengeschaltetem Getriebe versehen sind. Zwar kann man damit zuverlässig die Stellung des Drehkranzes in jeder beliebigen Position messen und auch die erforderliche Redundanz für dieses System bereitstellen, jedoch ist ein hoher Fertigungsaufwand erforderlich. Zudem bauen diese Drehwinkelnehmer relativ groß und haben auch ein relativ hohes Gewicht, was im Zuge einer Leichtbauweise der Gesamtmaschine nachteilhaft ist. Insgesamt ist dieses System somit vergleichweise kosteninten-siv.

Aufgabe der Erfindung ist es, eine Vorrichtung und ein Verfahren zu schaffen, welches in einfacher und sehr verlässlicher Weise eine genaue Ermittlung der Winkelstellung des Drehschemels mit einem darauf angeordneten Mastausleger ermöglicht. Zugleich soll Redundanz gewährleistet werden und muss die Ausführung raum- und gewichtssparend erfolgen.

Diese Aufgabe wird erfindungsgemäß durch die im kennzeichnenden Teil des Anspruchs 1 enthalte-nen Merkmale für die Vorrichtung gelöst. Für das Verfahren wird diese Aufgabe durch die im kennzeichnenden Teil des Anspruchs 7 enthaltenen Merkmale gelöst, wobei zweckmäßige Weiterbildungen der Vorrichtung und des Verfahrens durch die Merkmale in den Unteransprüchen gekennzeichnet sind.

Nach Maßgabe der Erfindung wird unmittelbar die Umdrehungszahl der Antriebswelle des Antriebs bzw. einer Welle eines daran angebundenen Getriebes für den Antrieb des Drehschemels und nicht der Drehkranz abgegriffen. Dadurch können einfache Sensoren verwendet werden und zwar vorteilhafterweise zwei oder vier Sensoren, ohne dass dies einschränkend zu verstehen ist, wobei die getriggerten Impulssignale in einfacher Weise gezählt werden können. Bei der Verwendung von zwei Sensoren lassen sich hierbei sowohl die Drehrichtung, also die Umlaufrichtung, der Antriebswelle und damit auch des Drehschemels ermitteln sowie der Drehwinkel selbst. Je nach Drehrichtung erfolgt hierbei eine Aufwärts- oder Abwärtszählung. Mit diesen Zählimpulsen lässt sich über eine Auswerteinheit ohne weiteres unter Berücksichtigung der speziellen Antriebsgeometrie, insbesondere Geometrie des Übersetzungsgetriebes und mit einem Drehkranz am Drehschemel zusammenwirkenden Abtriebsritzel des Getriebes die exakte Position des Drehkranzes einschließlich der jeweiligen Drehrichtung bestimmen.

Das erfindungsgemäße Winkelmesssystem nutzt somit den ohnedies vorhandenen Antrieb, der in der Regel durch einen hydraulischen Antrieb bzw. Hydraulikmotor gebildet ist, einschließlich des dort vorhandenen Getriebes, dessen Abtriebsritzel mit dem Drehkranz des Drehschemels in Eingriff steht. Zweckmäßiger Weise erfolgt die Impulsgabe über eine Nockenscheibe, die drehfest auf der Antriebswelle oder einer Getriebewelle, insbesondere der Getriebeabtriebswelle, angeordnet ist und deren Tastnocken dann durch um die Nockenscheibe herum platzierte Sensoren abgegriffen wird. Dadurch kann eine einfache Impulszählung erfolgen, die je nach Drehrichtung aufzählend oder abzählend ist. Dadurch lassen sich Sensoren, insbesondere Digitalsensoren verwenden, wie sie ohne Weiteres auf dem Markt in billiger Weise verfügbar sind. Der Mehraufwand, der sich durch dieses System ergibt, ist damit alleine durch die zusätzlich aufzuflanschende Nockenscheibe und den Sensoren bedingt, die in kleiner Bauweise verwendet werden können.

Zweckmäßiger Weise wird im Falle von zwei Sensoren eine Nockenscheibe mit zwei Tastnocken verwendet, wobei in weiterer vorteilhafter Ausbildung die Tastnocken durch radiale Flanken bzw. Schultern der Nockenscheibe ausgebildet sind. Durch die Flanken werden die Sensoren ausgelöst und werden die entsprechenden Impulssignale erzeugt, die einer geeigneten Auswerteinheit Zugeführt werden können. Hierbei ist es mit zwei Sensoren möglich sowohl die jeweilige Drehrichtung, also vorwärts oder rückwärts, zu erfassen und auch die entsprechenden Drehwinkelwerte aufzunehmen. Die Drehwinkelbestimmung erfolgt dann durch eine bloße Multiplikation mit der durch die Getriebegeometrie bedingten Auflösung bzw. Parametern. Durch Impulsvervielfachung ergibt sich insgesamt eine sehr kleine Auflösung, die eine exakte feinfühlige Drehwinkelbestimmung ermöglicht.

In einer zweckmäßigen Weiterbildung werden vier Sensoren verwendet, die vorzugsweise in einem Winkelabstand von 90° um die Nockenscheibe gruppiert sind. Ein solches Messsystem hat den Vorteil, dass bei Ausfall eines Sensors gleichwohl sowohl die Drehrichtung wie auch der Drehwinkelwert durch Impulse erkannt wird und damit auch für den Fall des Ausfalls eines Sensors eine weitere Drehwinkelbestimmung möglich ist. Dadurch erfolgt eine gegenseitige Überwachung der Plausibilität der mehreren Sensoren.

Die erfindungsgemäße Verfahrensweise zeichnet sich durch die Zählung der getriggerten Impulse impliziert durch die Flanken der Nockenscheibe aus, wobei im Falle von mehreren Sensoren je nach Drehrichtung aufwärts und abwärts gezählt wird und damit bei beliebiger Verschwenkung des Drehschemels gleichwohl sich die exakte Drehwinkelposition bestimmen lässt. Die Erfindung ist insbesondere für Autobetonpumpen mit Mastauslegern mit mehreren Mastarmen anwendbar, jedoch auch für stationäre Betonpumpen mit Drehschemel und Mastausleger.

Die Drehwinkelbestimmung kann in einfacher Weise unter Verwendung einer Auswerteinheit erfolgen, welche einen Rechner zur Zählung der Impulse aufweist und einen Multiplikator, der den Zählwert unter Beachtung der speziellen Geometrie des Drehschemelantriebs, die durch das Übersetzungsgetriebe und das Verhältnis zwischen Antriebsritzel und Drehkranz bedingt ist, und der damit initiierten Auflösung in den jeweiligen Drehwinkelwert umrechnen kann. In vorteilhafter Weise wird als Referenzpunkt jeweils die Ruhestellung des Mastarms in der Mastauflage verwendet, in welcher der Mastausleger in der Regel in Längsrichtung der Fahrzeugachse positioniert und in einer Mastauflage abgelegt ist. Das Messsystem lässt sich in einfacher Weise auch auf vorhandene Fahrzeuge umsetzen und ist in der Zählung eindeutig, was für eine exakte Positionsbestimmung zweckmäßig ist. Die Erfindung zeichnet sich hierbei durch einen einfachen und robusten Aufbau aus. Da als Sensoren herkömmliche Sensoren ohne weiteres verwendet werden können, ist auch der Kostenfaktor durch diese Zusatzmaßnahme sehr gering. Begünstigt wird dies dadurch, dass der Abgriff unmittelbar über den vorhandenen Antrieb und Getriebe erfolgt.

Nachfolgend werden Ausführungsbeispiele der Erfindung anhand der Zeichnungen beschrieben. Darin zeigen:
- Figur 1: eine Seitenansicht einer Autobetonpumpe und damit eine bevorzugte Ausführungsform;
- Figur 2: eine Seitenansicht des in Figur 1 dargestellten Fahrzeugs mit gekipptem Mastausleger;
- Figur 3: eine Draufsicht des in Figur 2 dargestellten Fahrzeugs;
- Figur 4: eine schematisch gehaltene Draufsicht auf eine Nockenscheibe der erfindungsgemäßen Messeinrichtung;
- Figur 5: ein Diagramm von Schaltzuständen der Messeinrichtung nach Figur 4 bei einer Drehung im Uhrzeigersinn;
- Figur 6: eine analoge Draufsicht auf eine Nockenscheibe entsprechend Figur 4;
- Figur 7: ein Diagramm mit Schaltzuständen der Messeinrichtung nach Figur 6 bei einer Drehung im Gegenuhrzeigersinn;
- Figur 8: ein schematisch gehaltenes Blockschaltbild einer Messeinrichtung.

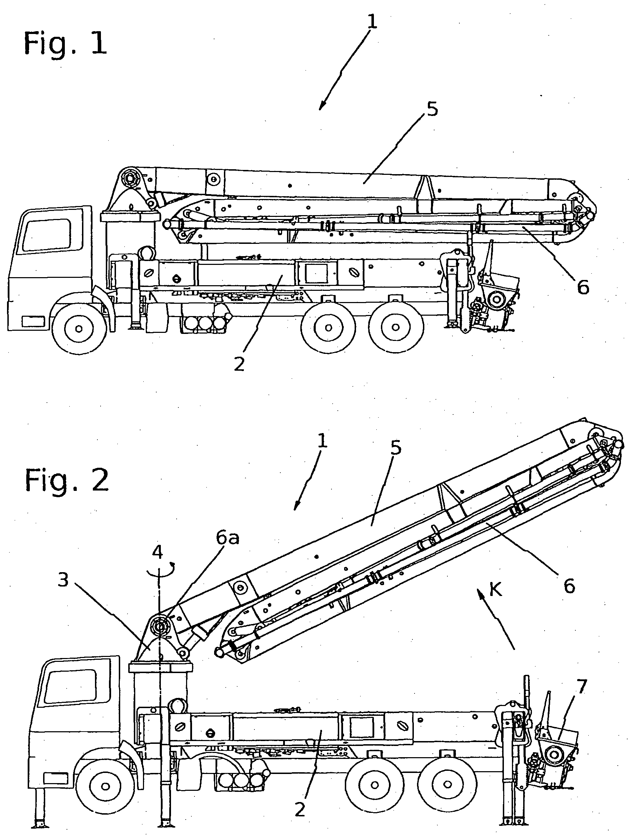

Figur 1 zeigt eine sogenannte Autobetonpumpe, wobei hier nur Teile dargestellt sind, die für das Verständnis der Erfindung erforderlich sind. Derartige Autobetonpumpen sind allgemein bekannt und zeichnen sich dadurch aus, dass die Betonpumpe auf einem Lastkraftfahrzeug montiert ist.

In der Zeichnung ist die Autobetonpumpe allgemein mit 1 bezeichnet, welche eine auf dem Fahrzeugrahmen angeordnete Betonpumpe 2 und einen ebenfalls auf dem Rahmen angeordneten Drehschemel 3 aufweist, der um seine zentrale vertikale Achse 4 in verschiedene Winkellagen drehbar ist, und einen mit 5 bezeichneten und hier aus mehreren Mastarmen ausgebildeten Mastausleger 5 trägt. Auf diesem Mastausleger 5 ist die Betonförderleitung 6 montiert.

Wie aus Figur 2 hervorgeht, ist der Mastausleger 5 auf dem Drehschemel bei 6a über ein Kippgelenk kippbar gelagert, so dass der Mastausleger 5 aus der Ruhestellung in Figur 1 in die aus Figur 2 ersichtliche Kippstellung überführbar ist, wobei die Kippbewegung mit Pfeil K bezeichnet ist.

Für den Betonpumpenbetrieb der in den Figuren 1 bis 3 dargestellten Autobetonpumpe wird Beton in der Regel über einen fahrbaren Mischer in einem am hinteren Ende des Fahrzeugrahmens angeordneten Einfülltrichter 7 gekippt, der von der Pumpe 2 angesaugt und getaktet in die Förderleitung 6 geführt wird.

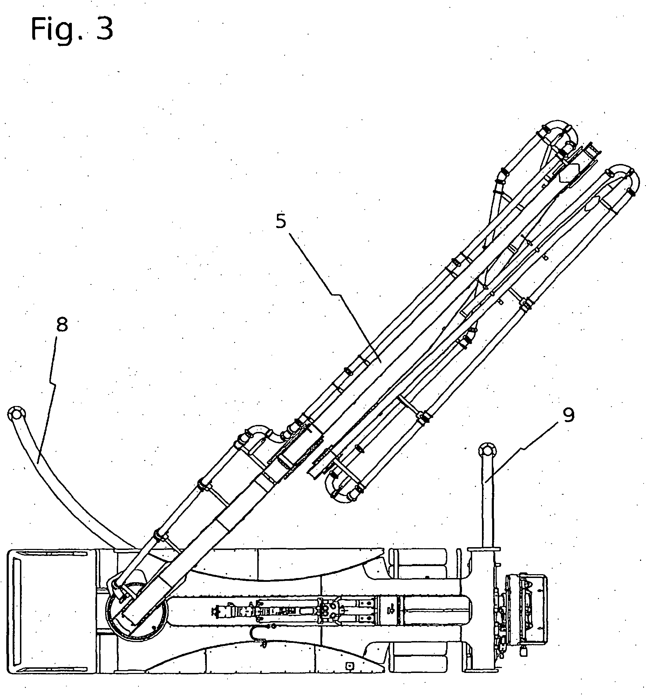

Zum Ausbringen des Betons wird hierbei der Mastausleger 5 ausgefahren und zwar durch Entfaltung der kippbar ineinander gelagerten Mastarme, wobei der Austrag des Betons am Ende der Rohrleitung über einen hier zeichnerisch nicht dargestellten, für sich jedoch bekannten Austragsrüssel erfolgt. In Folge der Kippbewegung und der Ausfaltbewegung des Mastauslegers 5 sowie der Drehung des Mastauslegers über den Drehschemel um die Schemelachse 4 kann mit dem Fahrzeug Beton an beliebige Stellen über einen sehr weiten Bereich ausgetragen werden. Derartige Autobetonpumpen eignen sich insbesondere für die Erstellung von Betondecken in mehrstöckigen Häusern, um nur einen der mehreren Anwendungsfälle darzustellen. Für den Betrieb ist ein sicherer Stand des Fahrzeugs für den Fall des Ausfahrens des Mastauslegers 5 erforderlich. Hierzu sind allgemein fordere und hintere Abstützungen 8 und 9 vorgesehen, die insbesondere in ausgefahrener Stellung aus Figur 3 ersichtlich sind. Zwar zeigt die Figur 3 die Abstützungen 8 und 9 nur auf einer Seite des Fahrzeugs, jedoch sind entsprechende Abstützungen auch auf der gegenüberliegenden Fahrzeugseite vorgesehen und können bedarfsweise entsprechend ausgefahren werden.

Je nach Weite des Ausfahrens der Mastarme des Mastauslegers 5 treten natürlich erhebliche Kippmomente am Fahrzeug auf, so dass unter anderem deswegen es wesentlich ist, nicht nur die Mastarmauslage des Mastauslegers 5 zu bestimmen sondern auch die genaue Position des Drehkranzes, der den Mastsausleger 5 trägt.

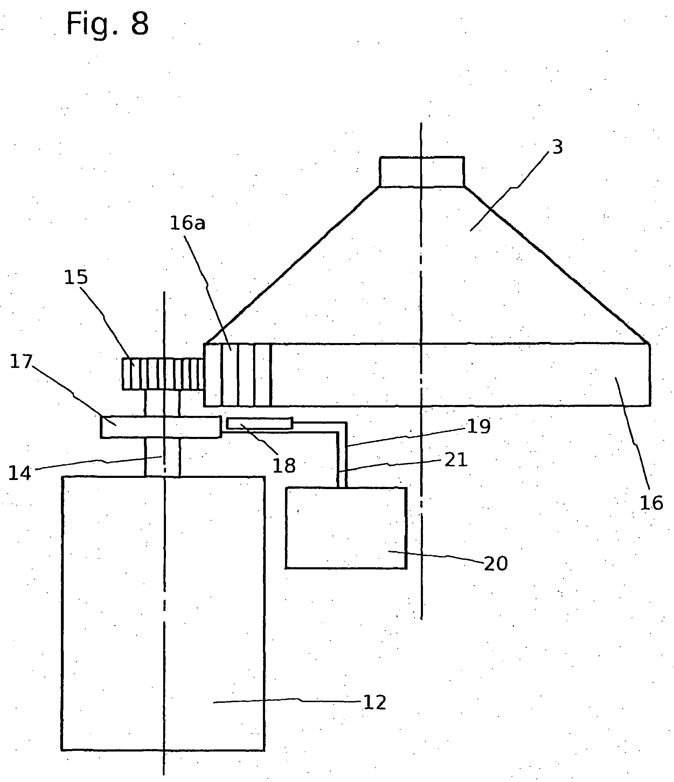

Die Drehung des Drehschemels 3 und damit des daran aufgehängten Mastauslegers 5 erfolgt, was wiederum allgemein bekannt ist, über einen Antrieb und ein Getriebe, was schematisch in Blockbilddarstellung anhand der Figur 8 beschrieben ist.

In der Figur 8 ist der Antrieb für den Drehschemel 3 mit 12 bezeichnet, wobei es sich hier in der Regel um einen Hydraulikmotor handelt. Die Abtriebswelle des Motors 12 ist mit 14 bezeichnet. Die Abtriebswelle des Motors 12 führt in ein Getriebe, von dem der Einfachheit halber in Figur 8 nur das auf der Getriebeauslasswelle angeordnete Ritzel 15 gezeigt ist, wobei die Zähne des Ritzels nur angedeutet sind. Das Ritzel 15 wirkt mit einem am Drehschemel 3 angeordneten, hier nur schematisch dargestellten Drehkranz 16 zusammen, der um den Schemel 3 umlaufend ausgebildet und mit einer entsprechenden Verzahnung 16a versehen ist, die in Figur 8 der Einfachheit halber nur teilweise dargestellt ist. Jedenfalls wirkt das Ritzel 15 zum Zwecke des Drehantriebs des Drehschemels 3 mit der Verzahnung des Drehkranzes 16 des Drehschemels 3 zusammen.

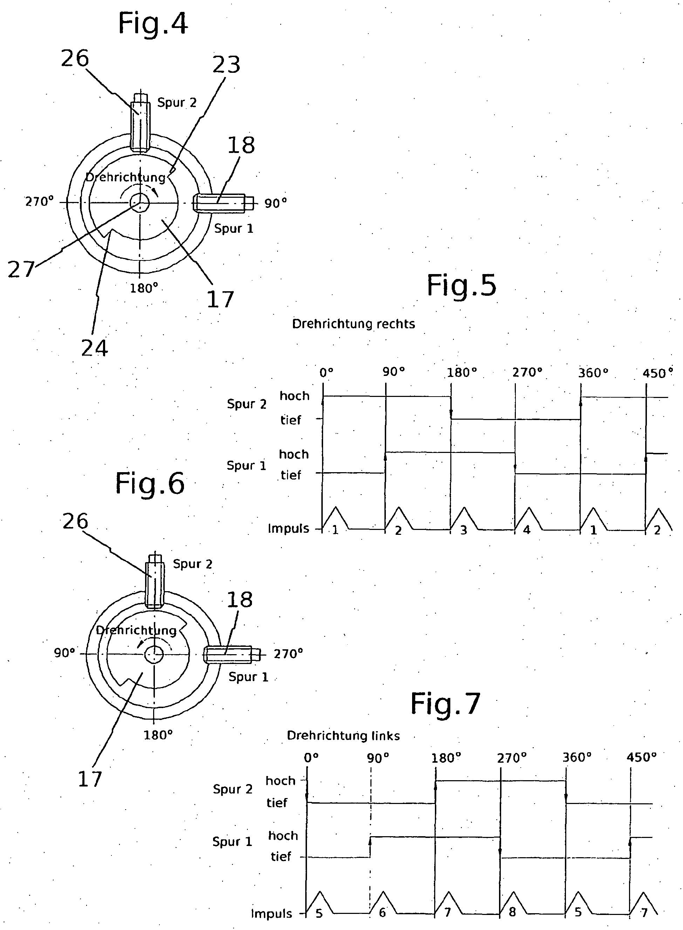

Wie deutlich aus Figur 8 hervorgeht, ist auf der Motorwelle 14 eine in Draufsicht aus den Figuren 4 und 6 ersichtliche Nockenscheibe drehfest angeordnet, die mit der Welle 14 umläuft. Die Nockenscheibe kann auch auf einer der Getriebewellen angeordnet sein. Um die Nockenscheibe 17 herum sind Sensoren bzw. Näherungsschalter 18 gruppiert, von denen in Figur 8 nur zwei bei dieser Ausführungsform vorhandene Sensoren 18 dargestellt sind. Die Sensoren tasten die umlaufende Nockenscheibe ab, die mit entsprechenden Tastnocken versehen ist. Sobald eine Tastnocke am Sensor vorbeiläuft, entsteht ein Impuls im Sensor 18, der über die Leitung 19 ein entsprechendes Impulssignal auf eine hier als Blockbild dargestellte Auswerteinheit 20 gibt. In Bezug auf den zweiten und aus Figur 8 nicht ersichtlichen Sensor 18 ist eine zweite Signalleitung 21 dargestellt.

Aus den Figuren 4 und 6 ist eine Ausführungsform einer Nockenscheibe ersichtlich. Hierbei sind bei dieser Nockenscheibe die Tastnocken durch radial verlaufende Schultern 23 und 24 gebildet, die um 180° zueinander winkelmäßig versetzt sind. In diesem Ausführungsbeispiel sind zwei Tastnocken in Form von Radialschultem 23 und 24 dargestellt, die mit zwei Sensoren 18 und 26 zusammenwirken. Diese Sensoren 18 und 26 sind, wie die Figuren 4 und 6 zeigen, um 90° versetzt zueinander angeordnet und radial zum Zentrum 27 der Nockenscheibe ausgerichtet. Das Zentrum der Nockenscheibe fällt mit der Wellenachse zusammen. Ersichtlich wird die Nockenscheibe in derselben Drehzahl wie die Antriebswelle 14 und damit mit gleicher Drehzahl angetrieben. Ersichtlich sind die Radialschultern 23 und 24 unterschiedlich gerichtet, wobei in der in Figur 4 durch Drehpfeil dargestellten Drehrichtung in Uhrzeigersinn die Radialschulter 23 eine vorlaufende und die Radialschulter 24 eine nachlaufende Schulter darstellt. Entsprechend werden unterschiedliche Schaltsignale gegeben, wobei die radiale Schulter 23 ein mit "high" bezeichnetes Schaltsignal und die radiale Schulter 24 ein im Diagramm in Figur 5 mit "low" bezeichnetes Schaltsignal gibt.

Als Sensoren werden hierbei allgemein übliche Sensoren verwendet, insbesondere Digitalsensoren. Die Sensoren können als induktive oder kapazitive Sensoren ausgebildet sein.

Bei Drehung der Nockenscheibe im Uhrzeigersinn wird ein Schaltimpuls "high" gegeben, sobald die radiale Schulter bzw. Tastnocke 23 am Sensor 26 vorbei läuft, der die Spur 2 im Schaltdiagramm nach Figur 5 darstellt. Es ergibt sich somit ein entsprechender Schaltzustand, der in Figur 5 bei der Winkelstellung 0° mit Pfeil nach oben dargestellt ist. Sobald die radiale Schulter um 90° weitergeführt ist, gelangt die Schulter 23 vor dem als Spur 1 ausgelegten Sensor 18, so dass für die Spur 1 im Schaltdiagramm nach Figur 5 nach einer Winkelumdrehung von 90° ein Schaltimpuls "high" gegeben wird, wie durch Pfeilrichtung im Diagramm nach Figur 5 und der Spur 1 ersichtlich. Bei einer Drehung um 180° gelangt die nachlaufende Schulter 24 an den Sensor 26, so dass in der Spur 2 wiederum ein Schaltimpuls erzeugt wird und zwar ein Schaltimpuls "low", was unter dem Winkel 180° in Figur 5 mit Pfeil nach unten dargestellt ist. Dadurch ergibt sich bei einem Umlauf der Nockenscheibe in der in Figur 4 gekennzeichneten Drehrichtung im Uhrzeigersinn ein Zustandsbild für die Schaltung entsprechend Figur 5.

Ändert man die Drehrichtung, wie aus Figur 6 ersichtlich ist, dann ergibt sich für dieselbe Ausbil-dung der Messeinrichtung ein Schaltbild, wie es aus Figur 7 hervorgeht. Sowohl bei der Drehrichtung nach Figur 4 wie auch bei der Drehrichtung nach Figur 6 ergeben sich somit vier eindeutige Impulsformen, wobei sich je nach Drehrichtung die Impulsformen unterscheiden, wie sich aus einem Vergleich der Zustandsbilder nach den Figuren 5 und 7 ergibt.

Bei den Zustandsbildern ergibt sich für Figur 5, dass sich mit den Impulsen 1, 2, 3 und 4 die inkrementelle Zählung der Impulse je Impuls um einen Zähler erhöht und sich bei umgekehrter Drehrichtung gemäß Figur 6 dann jeweils um einen Zähler herabgezählt wird bei den Impulsen 5, 6, 7 und 8. Diese inkrementelle Impulszählung wird, wie in Figur 8 angedeutet ist, in eine Auswerteinheit 20 gegeben, wo die Zählung bewerkstelligt wird, also je nach Drehrichtung nach oben oder nach unten entsprechend der Impulse gezählt wird.

In der Auswerteinheit wird dann abhängig von der Geometrie des Drehschemelantriebs der aktuelle Winkelwert berechnet und zwar durch Multiplikation des Zählwertes mit der Auflösung, die von den Getriebedaten abhängig ist, also von der Übersetzung des Getriebes, von der Anzahl der Zähne des mit dem Drehkranz in Eingriff stehenden Ritzels 15 gemäß Figur 8 und der Anzahl der Zähne des Drehkranzes, woraus sich die Übersetzung des Drehwerks ergibt. Daraus lässt sich die Gesamtübersetzung berechnen und damit die mechanische Auflösung je Umdrehung des Getriebeantriebs. In einer praktischen Ausführungsform, die hier nur beispielshaft erwähnt ist, ergibt sich aufgrund der Getriebegeometrie beispielsweise eine Auflösung von 0,433° je Umdrehung des Getriebeantriebs. Infolge der Impulsvervierfachung ergibt sich dann bei einer Messeinrichtung, wie sie anhand der Figuren 4 bis 7 dargestellt ist, eine Auflösung von 0,109° je Impuls.

Es liegt auf der Hand, dass sich in der Ruhestellung des Mastauslegers, in welcher sich der Mastausleger entsprechend der Darstellung in Figur 1 in Ausrichtung mit der Längsachse des Fahrzeuges befindet, ein Referenzpunkt ergibt, der zur Voreinstellung des Winkelwertes dient. Fährt das Fahrzeug also mit Mastaufleger in Ruhestellung zur Betriebsstätte, wo der Beton ausgetragen werden muss, dann startet die Zählung mit 0 ausgehend vom Referenzpunkt, sobald sich der Drehschemel in Uhrzeigerichtung oder gegen Uhrzeigerichtung dreht, also entsprechend verschwenkt wird. Damit entfällt ein aufwändiges Einstellen von Endschaltern an den Schaltpositionen.

In einer hier nicht dargestellten Ausführungsform werden anstelle von zwei Sensoren vorteilhafter-weise vier Sensoren verwendet, die um 90° zueinander versetzt um die Nockenscheibe herum angeordnet sind. Diese Ausführungsform hat den Vorteil einer erhöhten Sicherheit. Fällt nämlich einer der Sensoren aus, dann ergibt sich zwar ein geringerer Grad an Auflösung, jedoch werden gleichwohl sowohl die Drehrichtüng wie auch der Drehwinkel erkannt und gezählt. Das heißt, die Impuls-zählung läuft gleichwohl weiter, wenngleich mit geringerer Auflösung bezüglich des Winkelwerts. Zugleich ist erkennbar, dass ein Sensor ausgefallen ist, der dann ohne weiteres ersetzt werden kann. Dadurch kann ohne großen Aufwand der Sicherheitslevel entsprechend erhöht werden.

Selbstverständlich können auch mehr als vier Sensoren verwendet werden, wobei dann bei entsprechenden Nockenscheibenausbildungen dafür gesorgt wird, dass die Nockenscheibe auch unwuchtfrei ausgebildet ist.

Mit der geschilderten Messeinrichtung ergibt sich somit eine eindeutige Impulszählung, wobei durch einfache Multiplikation entsprechend der verwendeten Getriebegeometrie ein exakter Drehwinkelwert für jede Stellung des Drehschemels zu jedem Zeitpunkt ermittelt werden kann. Für diese Messeinrichtungen können Sensoren üblicher Bauart verwendet werden, die außerordentlich preisgünstig sind, so dass die Kosten der Messeinrichtung vergleichweise gering sind. Zudem ist jederzeit eine Redundanz gegeben. Vorteilhaft ist, dass mit der beschriebenen Messeinrichtung die Impulsreihen-folge eindeutig festgelegt ist, das heißt, in Drehrichtung links treten die Impulse immer in der Folge 1, 2, 3, 4 und dann wieder 1 usw. auf. In umgekehrter Drehrichtung gilt immer die Folge 5, 6, 7 und 8 und dann wieder 5 usw. Dadurch ist auch bei Umkehr der Drehrichtung die Folge eindeutig, das heißt, bei Umkehr nach Impuls 1 muss Impuls 2 folgen, nach 2 folgt 3 usw.

Dies ergibt sich aus der nachfolgend wiedergegebenen Tabelle 1, welche die Schaltzustände entsprechend der Messeinrichtung nach den Figuren 4 bis 7 wiedergibt.

**Tabelle 1**

| | Spur 1 | | | | Spur 2 | | | | Drehrichtung |
|---|---|---|---|---|---|---|---|---|---|
| | Flanke | | Pegel | | Flanke | | Pegel | | |
| Impuls Nr.: | + | - | High | Low | + | | High | Low | |
| 1 | X | | | | | | X | | links |
| 2 | | | X | | | X | | | |
| 3 | | X | | | | | | X | |
| 4 | | | | X | | | | | |
| 5 | | | X | | X | | | | rechts |
| 6 | | X | | | | | X | | |
| 7 | | | | X | | X | | | |
| 8 | X | | | | | | | X | |

Werden die für die Erkennung wichtigen Daten dauerhaft im System gespeichert, kann auch über den ausgeschalteten Zustand hinaus erkannt werden, ob sich das System ordnungsgemäß verhält.

Fällt in dem anhand der Figuren 4 und 6 dargestellten Ausführungsformen einer Messeinrichtung mit zwei Sensoren einer der Sensoren aus, dann ändert der Zähler seinen Wert nicht mehr (+1, -1 ...). Man kann dann, wenn man die Bewegungsrichtung weiß (z. B. im Falle elektrischer Ansteuerung) erkennen, welcher Sensor mit welchem Fehlerbild ausgefallen ist, jedoch wird der Zählwert dann ungenau, nämlich etwa halbierte Auflösung.

Bei Verwendung von vier Sensoren an der Nockenscheibe gegenüber zwei Sensoren nach den Figuren 4 und 6 werden dann aber zwei autarke Zähler aufgebaut, die sich gegenseitig auf Plausibilität überwachen können. Die hieraus gewonnenen Impulse bei vier Sensoren ergeben sich bei einer Anordnung der Sensoren um den Winkel 90° jeweils zu einander versetzt in der folgenden Tabelle 2

**Tabelle 2**

| **Fehlertabelle** | | | | | | | | | | |
|---|---|---|---|---|---|---|---|---|---|---|
| defekte Spur: | | | Wechsel bei: | | | Zusätzlich Impuls bei: | | Drehrichtung: | | Zählwert ungültig: |
| Geber: | Spur: | Zustand: | Geber: | Impuls alt | Impuls neu | Geber: | Impuls neu: | Geber 1: | Geber 2: | Geber: |
| 1 | 1 | high | 1 | 5 | 2 | 2 | 3 | rechts -> links | links | 1 |
| 1 | 1 | hiqh | 1 | 2 | 5 | 2 | 1 | links -> rechts | links | 1 |
| 1 | 1 | hiqh | 1 | 5 | 2 | 2 | 8 | rechts -> links | rechts | 1 |
| 1 | 1 | high | 1 | 2 | 5 | 2 | 6 | links -> rechts | rechts | 1 |
| 1 | 1 | low | 1 | 7 | 4 | 2 | 1 | rechts -> links | links | 1 |
| 1 | 1 | low | 1 | 4 | 7 | 2 | 3 | links -> rechts | links | 1 |
| 1 | 1 | low | 1 | 7 | 4 | 2 | 6 | rechts -> links | rechts | 1 |
| 1 | 1 | low | 1 | 4 | 7 | 2 | 8 | links -> rechts | rechts | 1 |
| 1 | 2 | high | 1 | 6 | 1 | 2 | 2 | rechts -> links | links | 1 |
| 1 | 2 | high | 1 | 1 | 6 | 2 | 4 | links -> rechts | links | 1 |
| 1 | 2 | high | 1 | 6 | 1 | 2 | 5 | rechts -> links | rechts | 1 |
| 1 | 2 | high | 1 | 1 | 6 | 2 | 7 | links -> rechts | rechts | 1 |
| 1 | 2 | low | 1 | 8 | 3 | 2 | 4 | rechts -> links | links | 1 |
| 1 | 2 | low | 1 | 3 | 8 | 2 | 2 | links -> rechts | links | 1 |
| 1 | 2 | low | 1 | 8 | 3 | 2 | 7 | rechts -> links | rechts | 1 |
| 1 | 2 | low | 1 | 3 | 8 | 2 | 5 | links -> rechts | rechts | 1 |
| 2 | 1 | high | 1 | 5 | 2 | 1 | 3 | links | rechts -> links | 2 |
| 2 | 1 | hiqh | 1 | 2 | 5 | 1 | 1 | links | links -> rechts | 2 |
| 2 | 1 | high | 1 | 5 | 2 | 1 | 8 | rechts | rechts -> links | 2 |
| 2 | 1 | high | 1 | 2 | 5 | 1 | 6 | rechts | links -> rechts | 2 |
| 2 | 1 | low | 1 | 7 | 4 | 1 | 1 | links | rechts -> links | 2 |
| 2 | 1 | low | 1 | 4 | 7 | 1 | 3 | links | links -> rechts | 2 |
| 2 | 1 | low | 1 | 7 | 4 | 1 | 6 | rechts | rechts -> links | 2 |
| 2 | 1 | low | 1 | 4 | 7 | 1 | 8 | rechts | links -> rechts | 2 |
| 2 | 2 | high | 1 | 6 | 1 | 1 | 2 | links | rechts -> links | 2 |
| 2 | 2 | high | 1 | 1 | 6 | 1 | 4 | links | links -> rechts | 2 |
| 2 | 2 | high | 1 | 6 | 1 | 1 | 5 | rechts | rechts -> links | 2 |
| 2 | 2 | high | 1 | 1 | 6 | 1 | 7 | rechts | links -> rechts | 2 |
| 2 | 2 | low | 1 | 8 | 3 | 1 | 4 | links | rechts -> links | 2 |
| 2 | 2 | low | 1 | 3 | 8 | 1 | 2 | links | links -> rechts | 2 |
| 2 | 2 | low | 1 | 8 | 3 | 1 | 7 | rechts | rechts -> links | 2 |
| 2 | 2 | low | 1 | 3 | 8 | 1 | 5 | rechts | links -> rechts | 2 |

Selbstverständlich ist die Erfindung nicht auf Autobetonpumpen beschränkt sondern auch auf stationäre Betonpumpen anwendbar, die mit einem Drehschemel für die Auflagerung eines Mastauslegers ausgestattet sind.

## Patentansprüche

1. Vorrichtung zur Dickstoff-, insbesondere Betonförderung, mit einer Dickstoffpumpe, einer von der Pumpe abführenden Förderleitung (6) und mit einem die Förderleitung (6) aufnehmenden Mastausleger (5), der mindestens einen Mastarm aufweist und auf einem vorzugsweise mit einem Drehkranz (16) versehenen Drehschemel (3) angeordnet ist, der zum Zwecke der Winkelausrichlung des Mastauslegers (5) durch einen Antrieb, insbesondere Hydraulikmotor (12) mit daran angeordnetem Getriebe, vorzugsweise über ein auf den Drehkranz (16) des Drehschemels (3) einwirkendes Getrieberitzel (15), drehbar ist, und mit einer mit Drehwinkelsensoren (18, 26) ausgestatteten Messeinrichtung zur Messung des Drehwinkels des Drehschemels (3),wobei die Messung des Drehwinkels des Drehschemels (3) durch eine direkte Messung des Drehwinkels des Antriebs (12) oder des zwischen Motor und Drehschemel (3) angeordneten Getriebes erfolgt, wobei für die Drehwinkelmessung die zum Getriebe führende Antriebswelle (14) des Antriebs (12) oder die Ausgangswelle des Getriebes abgegriffen wird, **dadurch gekennzeichnet, dass** die Messeinrichtung eine auf der Antriebswelle (14) oder einer Getriebewelle angeordnete Nockenscheibe (17) mit mindestens zwei Tastnocken und mindestens zwei Sensoren (18, 26) aufweist, welche die Tastnocken der Nockenscheibe (17) abgreifen, dass die Tastnocken unter gleichmäßigem Winkel zueinander versetzt auf der Nockenscheibe (17) vorgesehen sind, und dass die Sensoren (18, 26) in Anpassung an die Winkelversetzung der Tastnocken im gleichmäßige Winkelabstand zueinander um die Nockenscheibe (17) angeordnet sind und dass die Nockenscheibe (17) zwei Tastnocken aufweist, die um 180° zueinander versetzt sind, und dass die Messeinrichtung zwei Sensoren (18, 26) aufweist, die unter einem Winkel von 90° zueinander angeordnet sind, oder dass die Nockenscheibe (17) vier Tastnocken aufweist, die um 90° zueinander versetzt sind und entsprechend vier Sensoren für den Abgriff der Nockenscheibe (17) vorgesehen sind, die um 45° zueinander versetzt um die Nockenscheibe angeordnet sind.

2. Vorrichtung nach Anspruch 1, **dadurch gekennzeichnet, dass** die Tastnocken für die Sensoren durch radiale Schultern der Nockenscheibe (17) gebildet sind, die Flanken für die Auslösung der Sensoren bilden.

3. Vorrichtung nach einem der Ansprüche 1 oder 2, **dadurch gekennzeichnet, dass** die Sensoren induktive oder kapazitive Sensoren, vorzugsweise digitale arbeitende Sensoren sind.

4. Vorrichtung nach einem der vorhergehenden Ansprüche, **dadurch gekennzeichnet, dass** durch die Sensoren die Richtung und der Drehwinkel der Nockenscheibe gemessen wird.

5. Vorrichtung nach einem der vorhergehenden Ansprüche, **dadurch gekennzeichnet, dass** die Vorrichtung eine mit einem Rechner versehene Auswerteinheit (20) aufweist, welche die inkrementellen Impulssignale der Sensoren (18, 26) unter Berücksichtigung der jeweils vorgenommenen Drehrichtung auf- und abzählt und unter Berücksichtigung der bestehenden Geometrie des Drehantriebes des Drehschemels die Winkelposition des Drehkranzes (16) und damit des Drehschemels (3) bestimmt.

6. Vorrichtung nach einem der vorhergehenden Ansprüche, **dadurch gekennzeichnet, dass** die Vorrichtung durch eine Autobetonpumpe gebildet ist.

7. Verfahren zur Drehwinkelbestimmung eines Mastauslegers (5) einer Vorrichtung nach einem der vorhergehenden Ansprüche, **dadurch gekennzeichnet, dass** die Drehwinkelbestimmung durch Zählung inkrementeller Impulssignale der mindestens zwei Sensoren (16, 28) erfolgt, welche die Umdrehungszahl des Antriebs oder des Getriebes über die an der Welle des Antriebs oder des Getriebes angeordnete Nockenscheibe messen, dass je nach der von den Sensoren ermittelten Drehrichtung die Impulse auf- oder abgezählt werden, und dass je nach Zählwert durch eine Auswerteinrichtung (20) der aktuelle Drehwinkel des Drehschemels unter Berücksichtigung der vorgegebenen Antriebsgeometrie erfolgt.

8. Verfahren nach Anspruch 7, **dadurch gekennzeichnet, dass** die Zählung digital erfolgt.

9. Verfahren nach Anspruch 7 oder 8, **dadurch gekennzeichnet, dass** Impulssignale der Sensoren durch die Tastnocken der Nockenscheibe erzeugt werden, welche die Drehzahl des Antriebs oder des Getriebes wiedergibt.

10. Verfahren nach einem der Ansprüche 7 bis 9, **dadurch gekennzeichnet, dass** für die inkrementelle Zählung zwei, vorzugsweise vier Sensoren verwendet werden, die mit gleichmäßigem Winkelabstand zueinander um die Wellenachse versetzt sind.

## Claims

1. Device for conveying thick matter, in particular concrete, comprising a thick matter pump, a feed line (6), which leads away from the pump, and a boom (5), which receives the feed line (6), has at least one boom arm and is arranged on a slewing bogie (3), which is preferably provided with a slewing ring (16) and, for the purpose of the angular orientation of the boom (5), can be rotated by a drive, in particular a hydraulic motor (12) with a transmission arranged on it, preferably via a transmission pinion (15) acting on the slewing ring (16) of the slewing bogie (3), and comprising a measuring device, which is equipped with angle of rotation sensors (18, 26) and is intended for measuring the angle of rotation of the slewing bogie (3), wherein the angle of rotation of the slewing bogie (3) is measured by a direct measurement of the angle of rotation of the drive (12) or of the transmission arranged between the motor and the slewing bogie (3), wherein the drive shaft (14) of the drive (12), which leads to the transmission, or the output shaft of the transmission is tapped for the angle of rotation measurement, **characterized in that** the measuring device has a cam disc (17), which is arranged on the drive shaft (14) or on a transmission shaft and has at least two scanning cams and at least two sensors (18, 26), which scan the scanning cams of the cam disc (17), **in that** the scanning cams are provided on the cam disc (17) with a uniform angular offset from one another, and **in that** the sensors (18, 26) are arranged around the cam disc (17) with a uniform angular spacing adapted to the angular offset of the scanning cams and **in that** the cam disc (17) has two scanning cams, which are offset by 180° relative to one another, and **in that** the measuring device has two sensors (18, 26), which are arranged at an angle of 90° relative to one another, or **in that** the cam disc (17) has four scanning cams, which are arranged offset at an angle of 90° relative to one another, and consequently provided for the tapping of the cam disc (17) are four sensors, which are arranged around the cam disc offset by 45° relative to one another.

2. Device according to Claim 1, **characterized in that** the scanning cams for the sensors are formed by radial shoulders of the cam disc (17) that form flanks for triggering the sensors.

3. Device according to either of Claims 1 and 2, **characterized in that** the sensors are inductive or capacitive sensors, preferably digitally operating sensors.

4. Device according to one of the preceding claims, **characterized in that** the direction and the angle of rotation of the cam disc are measured by the sensors.

5. Device according to one of the preceding claims, **characterized in that** the device has an evaluation unit (20), which is provided with a computer and counts incremental impulse signals of the sensors (18, 26) up and down on the basis of the respective direction of rotation and determines the angular position of the slewing ring (16), and consequently of the slewing bogie (3), on the basis of the given geometry of the rotary drive of the slewing bogie.

6. Device according to one of the preceding claims, **characterized in that** the device is formed by a truck-mounted concrete pump.

7. Method for determining the angle of rotation of a boom (5) of a device according to one of the preceding claims, **characterized in that** the determination of the angle of rotation is performed by counting incremental impulse signals of the at least two sensors (16, 28), which measure the number of revolutions of the drive or of the transmission by way of the cam disc arranged on the shaft of the drive or of the transmission, **in that**, depending on the direction of rotation determined by the sensors, the impulses are counted up or down, and **in that**, depending on the counted value, the current angle of rotation of the slewing bogie is obtained by an evaluation device (20) on the basis of the predetermined drive geometry.

8. Method according to Claim 7, **characterized in that** the counting is performed digitally.

9. Method according to Claim 7 or 8, **characterized in that** impulse signals of the sensors are generated by the scanning cams of the cam disc, which reproduces the speed of the drive or of the transmission.

10. Method according to one of Claims 7 to 9, **characterized in that** two, preferably four, sensors, which are offset from one another with a uniform angular spacing around the shaft axis, are used for the incremental counting.

## Revendications

1. Dispositif de refoulement de liquide épais, notamment de béton, comprenant une pompe à liquide épais, une conduite de refoulement (6) partant de la pompe et comprenant une potence de mât (5) recevant la conduite de refoulement (6), laquelle possède au moins un bras de mât et est disposée sur une sellette orientable (3) de préférence pourvue d'une couronne de pivotement (16), laquelle peut être mise en rotation par un mécanisme d'entraînement en vue de l'orientation angulaire de la potence de mât (5), notamment un moteur hydraulique (12) sur lequel est monté une transmission, de préférence par le biais d'un pignon de transmission (15) agissant sur la couronne de pivotement (16) de la sellette orientable (3), et comprenant un appareil de mesure équipé de capteurs d'angle de rotation (18, 26) destiné à mesurer l'angle de rotation de la sellette orientable (3), la mesure de l'angle de rotation de la sellette orientable (3) étant effectuée par une mesure directe de l'angle de rotation du mécanisme d'entraînement (12) ou de la transmission disposée entre le moteur et la sellette orientable (3), l'arbre d'entraînement (14) du mécanisme d'entraînement (12) menant à la transmission ou l'arbre de sortie de la transmission étant capté pour la mesure de l'angle de rotation, **caractérisé en ce que** l'appareil de mesure possède un disque à cames (17) disposé sur l'arbre d'entraînement (14) ou un arbre de transmission, comprenant au moins deux cames de palpage et au moins deux capteurs (18, 26) qui captent les cames de palpage du disque à cames (17), **en ce que** les cames de palpage sont disposées sur le disque à cames (17) en étant décalées les unes des autres selon un angle régulier, et **en ce que** les capteurs (18, 26) sont disposés autour du disque à cames (17) avec un écart angulaire régulier entre eux en adaptation au décalage angulaire des cames de palpage et **en ce que** le disque à cames (17) possède deux cames de palpage qui sont décalées de 180° l'une de l'autre et **en ce que** l'appareil de mesure possède deux capteurs (18, 26) qui sont disposés selon un angle de 90° l'un par rapport à l'autre, ou **en ce que** le disque à cames (17) possède quatre cames de palpage qui sont décalées de 90° les unes des autres et quatre capteurs en conséquence sont prévus pour le captage du disque à cames (17), lesquels sont disposés autour du disque à cames en étant décalés de 45° les uns des autres.

2. Dispositif selon la revendication 1, **caractérisé en ce que** les cames de palpage pour les capteurs sont formées par des épaulements radiaux du disque à cames (17), lesquels forment des flancs pour le déclenchement des capteurs.

3. Dispositif selon l'une des revendications 1 ou 2, **caractérisé en ce que** les capteurs sont des capteurs inductifs ou capacitifs, de préférence des capteurs à fonctionnement numérique.

4. Dispositif selon l'une des revendications précédentes, **caractérisé en ce que** la direction et l'angle de rotation du disque à cames sont mesurés par le biais des capteurs.

5. Dispositif selon l'une des revendications précédentes, **caractérisé en ce que** le dispositif possède une unité d'interprétation (20) munie d'un ordinateur, laquelle incrémente et décrémente les signaux impulsionnels incrémentaux des capteurs (18, 26) en tenant compte du sens de rotation respectivement adopté, et détermine la position angulaire de la couronne de pivotement (16) et ainsi de la sellette orientable (3) en tenant compte de la géométrie existante du mécanisme d'entraînement rotatif de la sellette orientable.

6. Dispositif selon l'une des revendications précédentes, **caractérisé en ce que** le dispositif est formé par une autopompe à béton.

7. Procédé de détermination de l'angle de rotation d'une potence de mât (5) d'un dispositif selon l'une des revendications précédentes, **caractérisé en ce que** la détermination de l'angle de rotation est effectuée par comptage de signaux impulsionnels incrémentaux des au moins deux capteurs (18, 26) qui mesurent le nombre de rotations du mécanisme d'entraînement ou de la transmission par le biais du disque à cames disposé sur l'arbre du mécanisme d'entraînement ou de la transmission, **en ce que** les impulsions sont incrémentées ou décrémentées en fonction du sens de rotation déterminé par les capteurs, et **en ce que** l'angle de rotation actuel de la sellette orientable est déterminé en fonction de la valeur comptée par un appareil d'interprétation (20) en fonction de la géométrie prédéfinie du mécanisme d'entraînement.

8. Procédé selon la revendication 7, **caractérisé en ce que** le comptage s'effectue numériquement.

9. Procédé selon la revendication 7 ou 8, **caractérisé en ce que** les signaux impulsionnels des capteurs sont générés par les cames de palpage du disque à cames qui restituent la vitesse de rotation du mécanisme d'entraînement ou de la transmission.

10. Procédé selon l'une des revendications 7 à 9, **caractérisé en ce que** deux, de préférence quatre capteurs sont utilisés pour le comptage incrémental, lesquels sont décalés avec un écart angulaire régulier les uns par rapport aux autres autour de l'axe de l'arbre.
